# EUROPEAN PATENT SPECIFICATION

(11) **EP 4 200 066 B1**
(45) Date of publication and mention of the grant of the patent: **14.10.2026**
(21) Application number: 21766575.1
(22) Date of filing: 16.08.2021
(51) Int. Cl.: B01J 2/06, C01D 1/44

(54) **APPARATUS AND METHOD FOR THE GRANULATION OF ALKALI HYDROXIDES**
VORRICHTUNG UND VERFAHREN ZUR GRANULIERUNG VON ALKALIHYDROXIDEN
APPAREIL ET PROCÉDÉ POUR LA GRANULATION D'HYDROXYDES ALCALINS

(30) Priority: 21.08.2020 CN 202010848823
(43) Date of publication of application: 28.06.2023
(73) Proprietor: Bertrams Chemieanlagen AG, 4132 Muttenz (CH)
(72) Inventor: KUTZMUTZ, Stefan, 4303 Kaiseraugst (AG) (CH)
(74) Representative: Schneiders & Behrendt Bochum
(86) International application number: PCT/EP2021/072715
(87) International publication number: WO 2022/038087

(56) References cited:
- DE-A1- 2 409 695
- GB-A- 937 447
- IL-A- 47 799

## Description

### Technical Field

The invention relates to an apparatus for the granulation of molten alkali hydroxide, in particular for the production of sodium and potassium hydroxide prills.

### Background

Alkali hydroxides are basic chemicals used in industry. They are generated by electrolysis of the respective alkali salts, namely chlorides. The caustic solution resulting therefrom is concentrated in several steps. In the final step, the molten alkali hydroxide is cooled down and solidified to form flakes or prills. The world wide production of sodium hydroxide alone amounts to approximately 60 million tons per year.

Forming prills from alkali hydroxides starts with the generation of droplets of molten hydroxide, which are solidified in a cooling medium, conventionally dry air. The droplets are formed at the top of a cooling tower with an airflow inside and solidify on their way down through the tower. As air is a bad heat conductor and its specific heat capacity is low, huge quantities of air are needed for cooling the hydroxide droplets down, this requiring cooling towers of considerable height and large volumes of air. Space requirements of the cooling towers require high investment costs.

Use of a denser cooling medium lowers the space requirements of the cooling facility and the investment costs for a cooling tower. DE 2409695 A1 describes a concept for granulating molten alkali hydroxide in a granulation liquid with subsequent drying of the produced granules.

Metal powders are regularly prepared by spraying liquid metal into cold water. The metal spray solidifies immediately upon contact with water. However, due to the great solubility of alkali hydroxides in water, water cannot be used as a cooling medium.

Organic solvents are used as granulation liquid for solidifying liquid plastics. Alkali hydroxides, however, are very reactive and undergo rapid reactions with a great number of organic solvents. What is needed is a cooling medium that does not react with or dissolve alkali hydroxides, have a reasonably heat capacity and are easy to handle.

### Summary

Accordingly, the invention relates to an apparatus for granulation of molten alkali hydroxide with the features defined in claim 1.

The cooling unit can be combined with or represented by a heat recovery unit as the temperature level of the liquid granulation medium is considerably higher than that of the heated cooling air of a prill tower or that of the cooling water of a flaking machine.

Non-solvents for alkali hydroxides are in particular hydrocarbons. Accordingly, hydrocarbons and hydrocarbon mixtures having a boiling point of at least 100°C are preferred as liquid granulation media. In particular, the granulation medium should have a boiling point in between 120°C and 220°C. The hydrocarbons or hydrocarbon mixtures are preferably dearomatized refined petroleum distillates.

The boiling temperature of the liquid granulation medium is of some importance for the process. If too low, losses due to evaporation occur, which require either substitute solvent or costly recovery facilities. If too high, removal of residues of the liquid granulation medium from the alkali hydroxide granules is tedious. The range of 120°C to 220°C has proven to give best results. Moreover, hydrocarbons having a boiling point above 100°C are much less inflammable than low boiling hydrocarbons.

The apparatus of this invention is particularly suited for the preparation of sodium and potassium hydroxide prills. Upon tests, it was found that prilling in hydrocarbons as granulation media gives good results and that residual hydrocarbons on the surface of the resulting prills were reduced successfully below the detection limit by drying with hot air on a grid only.

The apparatus of the present invention requires a feeding line for the molten alkali hydroxide ending in a droplet generator, the latter being arranged on top of a granulation vessel. The droplet generator generally has a number of nozzles for providing droplets of the required size. The droplets fall down into the vessel, which is filled with the liquid granulation medium. There the droplets are cooled down below solidification temperature, solid granules sinking to the bottom. The heat contained in the droplets is transferred to and absorbed by the liquid granulation medium.

A conveyor recovers the granules from the bottom of the granulation vessel and conveys them to a drying unit. The conveyor may be a conventional trough chain conveyor, tube conveyor, bucket conveyor or screw conveyor, a conveyor being preferred, where the granules can lose at least part of their hydrocarbon freight.

According to the invention, the apparatus comprises a first conveyor taking up the granules from the bottom of the vessel and delivering them to a second conveyor for transport of the granules to the dryer. The second conveyor is a drip sieve vibration conveyor conveying the granules into and through the drying unit.

Preferably, the first and second conveyors allow adhering liquid granulation medium to drip off and flow back into the granulation vessel.

The drip sieve conveyor forwards the granules to the drying unit, where hot dry air is passed through the conveyor and over the granules. Adhering liquid is evaporated. The drying unit comprises a housing, a hot air generator and a ventilator for removing air loaded with liquid granulation medium. The air containing evaporated granulation liquid is preferably used in a combustion unit for heating the alkali hydroxide to be granulated. However, it is also possible to condensate evaporated granulation liquid in a cooling unit and to feed it back into the granulation vessel.

After drying, the dried granules pass a classifying unit, which preferably consists of a two deck sieve, fractionizing solids into an oversize fraction, a main fraction with the desired prill size and an undersize fraction. The oversize fraction and the undersize fraction are returned into the granulation process.

The granulation liquid dripping off from the granules on the conveyors is collected and transferred back into the granulation vessel via a collecting shaft or channel.

Since the granulation liquid in the granulation vessel heats up in the cause of the granulation process, a cooling circle is required. Preferably, liquid granulation medium from the bottom of the granulation vessel is passed through a cooling unit and recirculated, after cooling, to the top of the granulation vessel. Since the hot granulation medium may contain alkali hydroxide particles, the circulation line contains a filter. The cooling unit is preferably cooled with water. Of course, it is possible, to circulate the liquid granulation medium from the top to the bottom, which may avoid the filter. Moreover, it is possible, to integrate the cooling unit into the granulation vessel.

According to a preferred embodiment, hot granulation liquid, before being passed through the cooling unit, is used to heat the air used for drying the granules passing through the drying unit. This will lower the energy costs for the drying air and cooling costs in the cooling unit.

Also, other forms of heat recovery from the granulation liquid may be integrated in the liquid cicuit like heating steam generation or disctrict heating.

The present invention also refers to a process for the granulation of molten alkali hydroxide, the features of which are defined in claim 11.

Preferably, the hot liquid granulation medium is circulated through a cooling unit. Before being recirculated to the granulation vessel, it is used to heat the drying air in the drying unit. The cooling unit makes use of cooling water.

Collecting the alkali granules from the bottom of the granulation vessel takes place by means of a conventional conveying unit, as described above. The conveyor consist of a first conveyor and the second conveyor, both allowing adhering liquid to drip off from the granules. As to the other preferred features, it is referred to the description of the apparatus and the attached drawing. The attached drawing shows a preferred embodiment of a granulation apparatus of the invention.

### Brief description of drawings

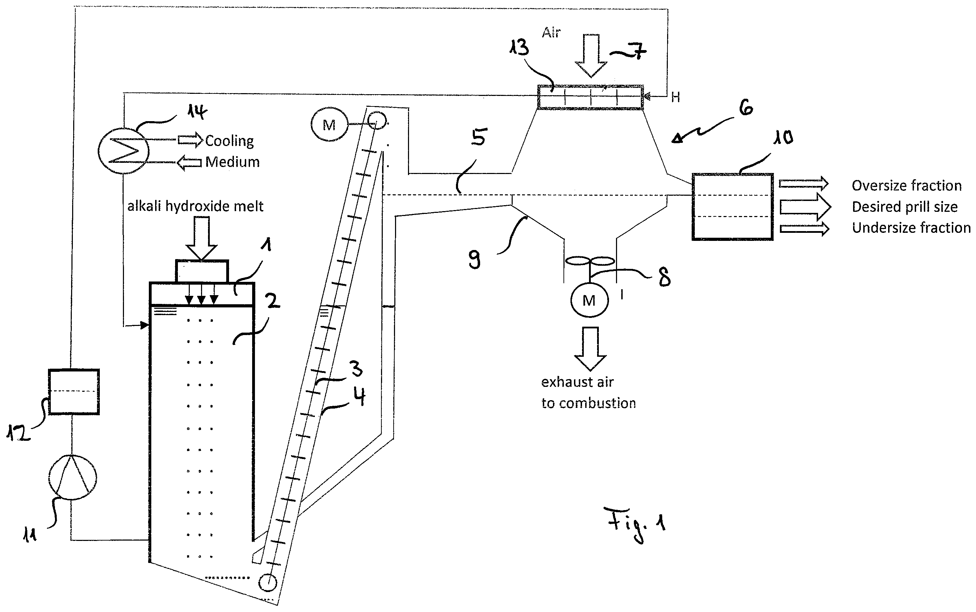

FIG.1 is a schematic diagram of an apparatus of granulation of molten alkali hydroxide according to the present application.

### Detailed description

Figure 1 shows a granulation vessel 2, which is filled with a liquid hydrocarbon having a boiling point above 120°C. The alkali hydroxide melt is fed in at the top through a droplet generator 1, generally comprising a multitude of nozzles separating the alkali hydroxide melt into individual droplets. The droplets fall down through the liquid hydrocarbon and collect at the bottom of vessel 2, where a first conveyor 3 conveys the solids within a tube 4 to a level above the liquid level within granulation vessel 2. From the top of the first conveyor 3 the granules fall on a second conveyor 5, a dripping sieve conveyor. Liquid hydrocarbon adhering to the granules drips off within conveyor 3 and dripping sieve conveyor 5. Dripping sieve conveyor 5 passes the granules on to the drying unit 6 by means of vibration.

Drying unit 6 comprises a hot air generator 7, a ventilator and a housing 9 allowing to collect air loaded with hydrocarbone vapour.

In drying unit 6 hot dry air is blown in, which passes through the dripping sieve 5 and the granules and takes up remaining liquid hydrocarbon. The exhaust air from drying unit 6 is passed to a combustion unit in a manner well known in the art, for example by an exhaust fan 8 to melt alkali hydroxide. The dried granules are passed on to a classifying unit 10, where the alkali hydroxide is fractioned into an oversize friction, a desired prill size fraction and an undersize fraction. The oversize and the undersize fraction are returned into the alkali hydroxide melt stream.

In order to cool the liquid hydrocarbon heated up by the granulation process, hot hydrocarbon is withdrawn from the bottom of vessel 2 and pumped by pump 11 through a recirculating filter 12 and air/liquid heat exchanger 13 at the top of the drying unit. Air/liquid heat exchanger 13 heats the drying air for the drying unit 6. The partly cooled down liquid hydrocarbon then is passed on to heat exchanger 14, where the liquid hydrocarbon is further cooled down by means of cooling water, before being passed on to the top of granulation vessel 2.

The letter M designates a driving motor.

It is to be understood that the embodiment of figure 1 is a preferred embodiment of the invention, other embodiments with features, that serve the same purpose, being possible and embraced, especially that of possible heat recovery.

## Claims

1. An apparatus for granulation of molten alkali hydroxide comprising
- a feeding line for the molten alkali hydroxide,
- a droplet generator (1)
for generating droplets of the molten alkali hydroxide,
- a granulation vessel (2) comprising a liquid granulation medium, which is a non-solvent for the alkali hydroxide and has a boiling point of at least 100°C,
- at least one conveyor for recovering alkali hydroxide granules from the liquid granulation medium,
- a drying unit (6) for the recovered alkali hydroxide granules, and
- a cooling unit (14) for cooling the liquid granulation medium,
**characterized in that** the at least one conveyor comprises a first conveyor (4) for lifting the alkali hydroxide granules from the bottom of the granulation vessel (2) to a level above the liquid level and a second conveyor (5) forwarding the alkali hydroxide granules through the drying unit (6) to a classifying sieve (10), wherein the second conveyor (5) is a drip sieve vibration conveyor.

2. The apparatus of claim 1**,** wherein the droplet generator comprises a multitude of nozzles.

3. The apparatus of claim 1, wherein the drying unit is an air dryer.

4. The apparatus of claim 1 comprising a circulation line with a pump for circulating hot liquid granulation medium to the cooling unit and back to the granulation vessel.

5. The apparatus of claim 4, wherein the circulation line re-circulates liquid granulation medium from the bottom of the granulation vessel to the top of the granulation vessel.

6. The apparatus of claim 4 or 5, wherein the circulation line comprises a recirculation filter.

7. The apparatus of claim 4 or 5, wherein the circulation line passes a heat exchanger for heat transfer from the hot liquid granulation medium to drying air in the drying unit.

8. The apparatus of claim 1, wherein in the drying unit the alkali hydroxide granules are dried with hot air passing through the drip sieve of the second conveyor.

9. The apparatus of claim 8, wherein the hot air from drying the alkaline hydroxide granules is fed to a combustion unit for melting the alkali hydroxide.

10. The apparatus of claim 1, comprising a heat recovery unit for recovering heat from the hot granulation liquid.

11. A process for the granulation of molten alkali hydroxide comprising the steps
- feeding molten alkali hydroxide to a droplet generator,
- generating droplets of molten alkali hydroxide,
- solidifying the droplets of molten alkali hydroxide in a liquid granulation medium contained in a granulation vessel, the granulation medium being a non-solvent for the alkali hydroxide,
- conveying alkali hydroxide granules from the granulation vessel to a drying unit comprising lifting the alkalihydroxide granules from the bottom of the granulation vessel to a level above the liquid level by a first conveyor and forwarding the alkali granules through a drying unit to a classifying sieve by a second conveyor, wherein the second conveyor is a drip sieve vibration conveyor and
- drying the alkali hydroxide granules with hot air.

12. The process of claim 11, wherein the boiling point of the granulation medium is 120°C to 220°C.

13. The process of claim 12, wherein the granulation medium is dearomatized refined petroleum distillate.

14. The process of claim 13, comprising a cooling cycle with a cooling unit for the liquid granulation medium.

15. The process of claim 14, wherein the cooling cycle supplies heat to the drying air by heat exchange.

## Patentansprüche

1. Vorrichtung zur Granulierung von geschmolzenem Alkalihydroxid, umfassend
- eine Zuführleitung für das geschmolzene Alkalihydroxid,
- einen Tropfenerzeuger (1)
zum Erzeugen von Tropfen des geschmolzenen Alkalihydroxids.
- einen Granulierbehälter (2),
der ein flüssiges Granuliermedium umfasst, das ein Nichtlösungsmittel für das Alkalihydroxid ist und einen Siedepunkt von mindestens 100 °C aufweist,
- mindestens einen Förderer zur Rückgewinnung von Alkalihydroxidgranulaten aus dem flüssigen Granuliermedium,
- eine Trocknungseinheit (6) für die zurückgewonnenen Alkalihydroxidgranulate und
- eine Kühleinheit (14) zum Kühlen des flüssigen Granuliermediums,
**dadurch gekennzeichnet, dass** der mindestens eine Förderer einen ersten Förderer (4) zum Anheben der Alkalihydroxidgranulate vom Boden des Granulierbehälters (2) auf ein Niveau oberhalb des Flüssigkeitsspiegels und einen zweiten Förderer (5) zum Weiterfördern der Alkalihydroxidgranulate durch die Trocknungseinheit (6) zu einem Klassiersieb (10) umfasst, wobei der zweite Förderer (5) ein Abtropfsieb-Schwingförderer ist.

2. Vorrichtung nach Anspruch 1, wobei der Tropfenerzeuger eine Vielzahl von Düsen umfasst.

3. Vorrichtung nach Anspruch 1, wobei die Trocknungseinheit ein Lufttrockner ist.

4. Vorrichtung nach Anspruch 1, umfassend eine Zirkulationsleitung mit einer Pumpe zum Zirkulierenlassen von heißem flüssigem Granuliermedium zur Kühleinheit und zurück zum Granulierbehälter.

5. Vorrichtung nach Anspruch 4, wobei die Zirkulationsleitung flüssiges Granuliermedium vom Boden des Granulierbehälters zum oberen Bereich des Granulierbehälters rezirkuliert.

6. Vorrichtung nach Anspruch 4 oder 5, wobei die Zirkulationsleitung einen Rezirkulationsfilter umfasst.

7. Vorrichtung nach Anspruch 4 oder 5, wobei die Zirkulationsleitung durch einen Wärmetauscher zur Wärmeübertragung von dem heißen flüssigen Granuliermedium auf Trocknungsluft in der Trocknungseinheit verläuft.

8. Vorrichtung nach Anspruch 1, wobei in der Trocknungseinheit die Alkalihydroxidgranulate mit Heißluft getrocknet werden, die durch das Abtropfsieb des zweiten Förderers strömt.

9. Vorrichtung nach Anspruch 8, wobei die Heißluft aus der Trocknung der Alkalihydroxidgranulate einer Verbrennungseinheit zum Schmelzen des Alkalihydroxids zugeführt wird.

10. Vorrichtung nach Anspruch 1, umfassend eine Wärmerückgewinnungseinheit zur Rückgewinnung von Wärme aus der heißen Granulierflüssigkeit.

11. Verfahren zur Granulierung von geschmolzenem Alkalihydroxid, umfassend die Schritte
- Zuführen von geschmolzenem Alkalihydroxid zu einem Tropfenerzeuger,
- Erzeugen von Tropfen des geschmolzenen Alkalihydroxids,
- Verfestigen der Tropfen des geschmolzenen Alkalihydroxids in einem flüssigen Granuliermedium, das in einem Granulierbehälter enthalten ist, wobei das Granuliermedium ein Nichtlösungsmittel für das Alkalihydroxid ist,
- Fördern von Alkalihydroxidgranulaten aus dem Granulierbehälter zu einer Trocknungseinheit, umfassend das Anheben der Alkalihydroxidgranulate vom Boden des Granulierbehälters auf ein Niveau oberhalb des Flüssigkeitsspiegels mittels eines ersten Förderers und das Weiterfördern der Alkalihydroxidgranulate durch eine Trocknungseinheit zu einem Klassiersieb mittels eines zweiten Förderers, wobei der zweite Förderer ein Abtropfsieb-Schwingförderer ist, und
- Trocknen der Alkalihydroxidgranulate mit Heißluft.

12. Verfahren nach Anspruch 11, wobei der Siedepunkt des Granuliermediums 120 °C bis 220 °C beträgt.

13. Verfahren nach Anspruch 12, wobei das Granuliermedium ein dearomatisiertes raffiniertes Erdöldestillat ist.

14. Verfahren nach Anspruch 13, umfassend einen Kühlkreislauf mit einer Kühleinheit für das flüssige Granuliermedium.

15. Verfahren nach Anspruch 14, wobei der Kühlkreislauf der Trocknungsluft durch Wärmeaustausch Wärme zuführt.

## Revendications

1. Appareil de granulation d'hydroxyde alcalin fondu comprenant
- une conduite d'alimentation pour l'hydroxyde alcalin fondu,
- un générateur de gouttelettes (1)
pour générer des gouttelettes d'hydroxyde alcalin fondu,
- une cuve de granulation (2)
comprenant un milieu liquide de granulation, qui est un non-solvant pour l'hydroxyde alcalin et présente un point d'ébullition d'au moins 100 °C,
- au moins un convoyeur pour récupérer des granulés d'hydroxyde alcalin à partir du milieu liquide de granulation,
- une unité de séchage (6) pour les granulés d'hydroxyde alcalin récupérés, et
- une unité de refroidissement (14) pour refroidir le milieu liquide de granulation,
**caractérisé en ce que** ledit au moins un convoyeur comprend un premier convoyeur (4) pour soulever les granulés d'hydroxyde alcalin depuis le fond de la cuve de granulation (2) jusqu'à un niveau situé au-dessus du niveau du liquide, et un second convoyeur (5) acheminant les granulés d'hydroxyde alcalin à travers l'unité de séchage (6) jusqu'à un tamis de classification (10), le second convoyeur (5) étant un convoyeur vibrant à tamis d'égouttage.

2. Appareil selon la revendication 1, dans lequel le générateur de gouttelettes comprend une multitude de buses.

3. Appareil selon la revendication 1, dans lequel l'unité de séchage est un sécheur à air.

4. Appareil selon la revendication 1, comprenant une conduite de circulation munie d'une pompe pour faire circuler le milieu liquide de granulation chaud vers l'unité de refroidissement, puis de nouveau vers la cuve de granulation.

5. Appareil selon la revendication 4, dans lequel la conduite de circulation fait recirculer le milieu liquide de granulation depuis le fond de la cuve de granulation jusqu'à la partie supérieure de la cuve de granulation.

6. Appareil selon la revendication 4 ou 5, dans lequel la conduite de circulation comprend un filtre de recirculation.

7. Appareil selon la revendication 4 ou 5, dans lequel la conduite de circulation passe par un échangeur de chaleur pour le transfert de chaleur du milieu liquide de granulation chaud vers l'air de séchage dans l'unité de séchage.

8. Appareil selon la revendication 1, dans lequel, dans l'unité de séchage, les granulés d'hydroxyde alcalin sont séchés avec de l'air chaud traversant le tamis d'égouttage du second convoyeur.

9. Appareil selon la revendication 8, dans lequel l'air chaud provenant du séchage des granulés d'hydroxyde alcalin est acheminé vers une unité de combustion pour la fusion de l'hydroxyde alcalin.

10. Appareil selon la revendication 1, comprenant une unité de récupération de chaleur pour récupérer la chaleur du liquide de granulation chaud.

11. Procédé pour la granulation d'hydroxyde alcalin fondu comprenant les étapes consistant à :
- alimenter un générateur de gouttelettes en hydroxyde alcalin fondu,
- générer des gouttelettes d'hydroxyde alcalin fondu,
- solidifier les gouttelettes d'hydroxyde alcalin fondu dans un milieu liquide de granulation contenu dans une cuve de granulation, le milieu de granulation étant un non-solvant pour l'hydroxyde alcalin,
- acheminer des granulés d'hydroxyde alcalin depuis la cuve de granulation jusqu'à une unité de séchage, l'acheminement comprenant le soulèvement des granulés d'hydroxyde alcalin depuis le fond de la cuve de granulation jusqu'à un niveau situé au-dessus du niveau du liquide au moyen d'un premier convoyeur, ainsi que l'acheminement des granulés d'hydroxyde alcalin à travers une unité de séchage jusqu'à un tamis de classification au moyen d'un second convoyeur, le second convoyeur étant un convoyeur vibrant à tamis d'égouttage, et
- sécher les granulés d'hydroxyde alcalin avec de l'air chaud.

12. Procédé selon la revendication 11, dans lequel le point d'ébullition du milieu de granulation est compris entre 120 °C et 220 °C.

13. Procédé selon la revendication 12, dans lequel le milieu de granulation est un distillat de pétrole raffiné désaromatisé.

14. Procédé selon la revendication 13, comprenant un circuit de refroidissement muni d'une unité de refroidissement pour le milieu liquide de granulation.

15. Procédé selon la revendication 14, dans lequel le circuit de refroidissement fournit de la chaleur à l'air de séchage par échange thermique.
